# EUROPEAN PATENT APPLICATION

(11) **EP 3 905 175 A1**
(43) Date of publication of application: **03.11.2021**
(21) Application number: 19906517.8
(22) Date of filing: 23.12.2019
(51) Int. Cl.: G06Q 30/00

(54) **COMPUTER VISION SYSTEM FOR ASSISTING THE SALE OF GOODS SOLD BY WEIGHT**

(30) Priority: 28.12.2018 RU 2018147315
(71) Applicant: Komarov, Andrei Andreevich, Stavropol, 355003 (RU)
(72) Inventor: Komarov, Andrei Andreevich, Stavropol, 355003 (RU)
(74) Representative: Spengler, Robert
(86) International application number: PCT/RU2019/050255
(87) International publication number: WO 2020/139170

(57) **Abstract**

The invention concerns a computer vision system for the sale of dry goods. The technical result obtained is increased automation in the sale of dry goods. The system consists of: A computer vision module comprising a digital videocamera to obtain an image of the product being weighed, a computer that processes a cascade of interconnected neural-net algorithms in order to identify the product, and a network interface; a single data processing centre (DPC) for all retail outlets of a given chain that comprises a knowledge base of an expert system, a learning module of the neutral network, and a network interface; in the respective shop, an infrastructure server is installed that connects the modules at the point of sale, serving to aggregate the data of the shop's neural network that are obtained from the computer vision modules, and to exchange the data with the information system of the shop and the DPC using processing resources of the infrastructure server and some of the product identifying processes are passed from the modules installed on the weighing devices in the shop to the shop's infrastructure server; the functions of the DPC are allocated to the shop's infrastructure server without any possibility of communication with the single DPC of the retail chain.

## Description

### Field

The invention concerns electronic counting systems to aid in sales in the FMCG area, and may be used in sales networks.

### Abbreviations and Terms Used:

FMCG (Fast Moving Consumer Goods) - General term for goods for daily use by a wide spectrum of buyers, which are relatively inexpensive and sell quickly;
PLU Code - (Price LookUp) - System for unique identification of goods;
Dataset - a set of data;
POS terminal (Point Of Sale) - software-hardware complex installed at the workstation of a cashier;
DPC - Data processing centre

### Prior Art

In the FMCG field, high turnover is the basis for good profitability. The automation of sales processes is a basic indicator of increased efficiency.

Various electronic sales assistance systems are known from the prior art that automate numerous aspects of the sales process, allowing for accounting, database management, reading graphic markings on goods during sales, correlating these with databases, identifying the product on this basis, and automatically creating a sales receipt for the product. However, the inadequate automation of the sales process for dry goods in supermarket till areas is due to the inability to automatically identify goods that do not have special graphic markings (barcodes) for automatic receipt creation.

One analogous solution are electronic shop scales for weighing products that are intended for installation in checkout modules (website: https://www.store.ru/catalog/vstraivaemye-vesy-vesovye-moduli-32124). Scales that are integrated in checkout modules have an interface to connect with the IT system (server) of the shop, and translate the weight data on the product being weighed during the weighing process. In order to determine price and issue a receipt, the operator must visually identify the product being weighed and manually cross-reference it with the PLU code of the product in the shop's database.

Another analogous solution are electronic self-service shop scales with a price tag print-out function for subsequent payment at the till (website: http://www.izmteh.ru/vesy_samoobs!uzhivaniya_s_sensornym_displeem_cl7000_s/v esy_samoobsluzhivaniya_s_sensornym_displeem_cl7000_15s_tcp_ip/, http://www.servplus.ru/equipment/detail/DigiSM5500/). Such scales are installed in the sales area of the shop. The scales are integrated into the shop's computer system. As a user interface for the buyer, the scales have a graphic sensor display, and, during weighing, prompt the buyer to enter the product code or select a product from a menu of several products available for sale.

In all analogous scales currently in use in retail outlets to determine prices and issue receipts, the operator must visually identify the product being weighed and manually correlate it with the product's PLU code from the shop's database. The prior-art scales do not allow for the automated sale of dry goods in FMCG shops.

### Summary Description of the Invention

The system consists of: A computer vision module comprising a digital videocamera to obtain an image of the product being weighed, a computer that processes a cascade of interconnected neural-net algorithms in order to identify the product, and a network interface; a single data processing centre (DPC) for all retail outlets of a given chain that comprises a knowledge base of an expert system, a learning module of the neutral network, and a network interface; in the respective shop, an infrastructure server is installed that connects the modules at the point of sale, serving to aggregate the data of the shop's neural network that are obtained from the computer vision modules, and to exchange the data with the information system of the shop and the DPC using processing resources of the infrastructure server and some of the product identifying processes are passed from the modules installed on the weighing devices in the shop to the shop's infrastructure server; the functions of the DPC are allocated to the shop's infrastructure server if it is not possible to communicate with the single DPC of the retail chain.

### Technical Problem

The invention makes it possible to provide existing prototypes with specialised elements of a computer vision system based on artificial intelligence (Al) technology in order to automatically identify dry goods, cross-reference the dry goods on the scale with product information from the shop's computer system, or, at least, to provide the user with options to identify the product from a limited list provided by the neural network. Another objective of the invention is to automate the sale of dry goods in FMCG outlets without having to change out the existing POS equipment. The technical result is increased automation in the sale of dry goods by means of automatic identifying of the respective products. Increased speed of the sales assistance system for FMCG. Elimination of human error in shop inventory management (re-grading) in sales.

### Solution

The aforementioned technical result is obtained by the computer vision system for dry goods sales consisting of:
- a computer vision module installed on shop equipment involved in the sale of dry goods, comprising a digital video camera to obtain an image of the product being weighed, a computer that processes a cascade of interconnected neural-net algorithms in order to identify the product, and a network interface for communication with the DPC and the shop's computer system;
- a single DPC for all retail outlets of a given chain that comprises a knowledge base of an expert system, in which training data for the neutral network are accumulated and stored, a learning module of the neutral network, and a network interface in order to exchange information with the computer vision module(s).

The network interfaces of elements of the system may provide for wired or wireless connections.

If there is more than one computer vision module in a shop, an infrastructure server is installed to connect the modules within the POS; this serves to aggregate data obtained from the computer vision modules for the shop's neural network and exchange data with the shop's computer system and the DPC. In order to increase the processing speed of the neutral-network algorithms in the computer vision modules, processing resources of the infrastructure server may be used. Some product identification processes may be passed from modules installed on the product scales in the shop to the shop's infrastructure server.

The functions of the DPC may be allocated to the shop's infrastructure server, e.g. if it is not possible to communicate with the single DPC of the respective retail chain.

### Benefits of the Invention

Advantages of the system of the invention:
- Cashiers do not waste time searching for products in the database when weighing.
- Time required for customer service operations is reduced.
- The system eliminates human error from the sale process.
- The computer vision system allows for detection of any economic offences committed by the cashier.
- The system eliminates re-grading in the sale of dry goods.
- Computer vision systems on self-service scales reduce the time required for buyers to weigh the products.
- The burden on the printer of the scales due to reprinting of incorrect price tags is reduced, thus optimising the utilisation of the resources of the devices.

### Brief Description of the Drawings

**Fig. 1**

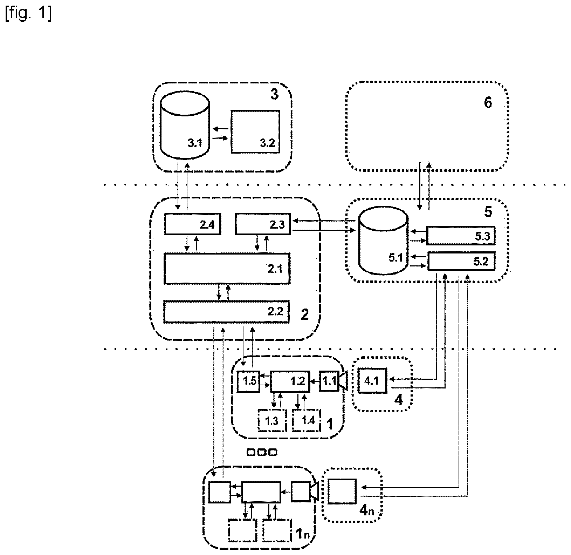

   [Fig. 1] A schematic representation of the structure of a computer vision system for use in the sale of dry goods in a retail outlet.
**Fig. 2**

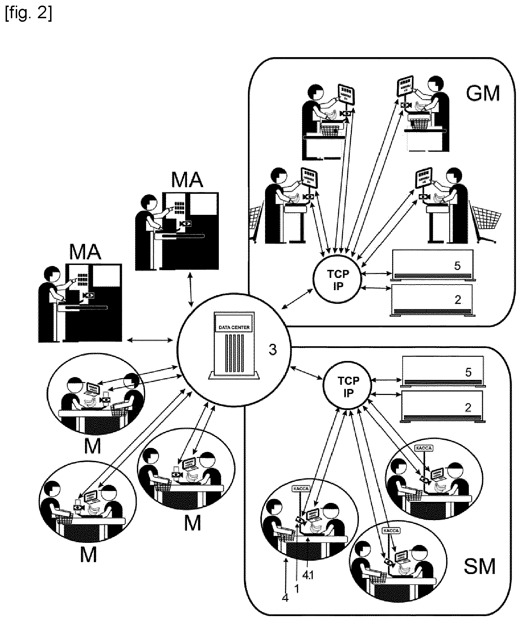

   [Fig. 2] The topology of the computer vision system for use in the sale of dry goods in use is shown.
**Fig. 3**

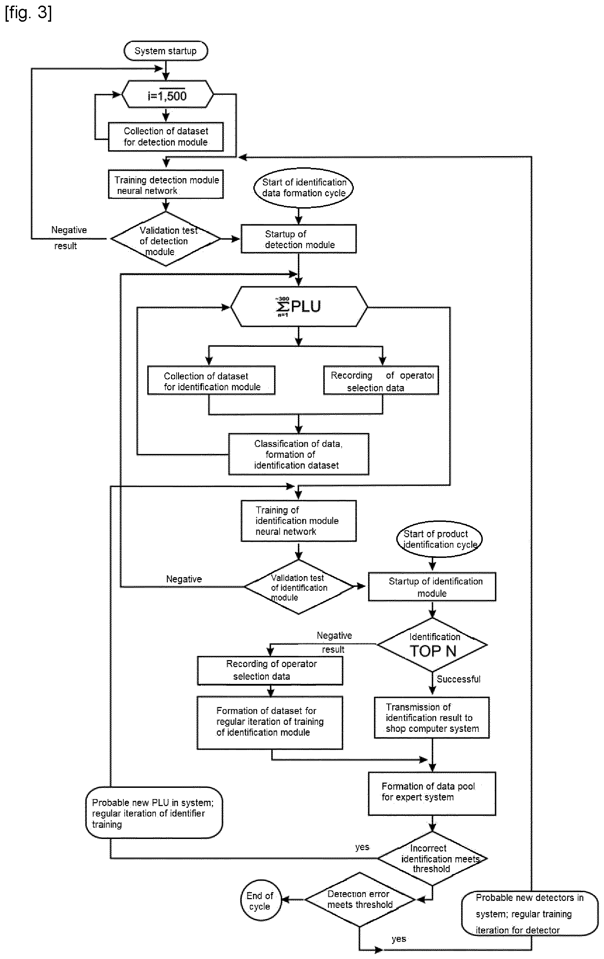

   [Fig. 3] An algorithm for startup, training, and functioning of the computer vision system for use in the sale of dry goods in use is shown.

The following references are used in the drawings:
1 ... 1n - Computer vision module on scale.
1.1 - Network interface
1.2 - Digital video camera.
1.3 - Computer, work module of neural network.
1.4 - Neural-network detection model.
1.5 - Neural-network identification model.
2 - Infrastructure server joining computer vision modules into clusters.
2.1 - Data exchange interface with the single DPC.
2.2 - Data exchange interface with the shop's computer system.
2.3 - Information module of the shop's computer vision system.
2.4 - Data aggregator of the shop's neural network.
3 DPC of the computer vision system of the retail chain.
3.1 - Training module of the neural network.
3.2 - Knowledge base of the expert system of the computer vision neural network.
4... 4n - Till area, till, POS terminal.
4.1 - Scale of POS terminal, self-service scale.
5 - Shop's computer system.
5.1 - Shop's inventory management database.
5.2 - Users - shop staff, cashiers, buyers for self-service scales (operators interacting with the computer back-end of the shop).
5.3 Interface for data exchange with shop equipment, POS terminals, self-service scales.
6 - Inventory management system of the retail chain.
GM - Hypermarket with self-service tills, self-service scales.
SM - Supermarket with tills and till scales.
M - Shop with single till and no infrastructure server.
MA - Shop with no sales assistant, automated sales system (e.g. Amazon Go).

### Description of Embodiments

A computer vision system for the sale of dry goods (1, 2, 3) characterised in that it is installed/mounted on the existing operating sales infrastructure of the retail outlet (4, 5, 6), requiring no significant changes in the architecture of the computer system of the retail outlet or the sales equipment used. The system consists of:
- Devices (1) installed on the scale (4.1) at each POS of the shop (4), as well as the self-service scales in the sales area, the scales in areas of the shop where price tag creation (printing) and graphic marking of dry goods for subsequent automatic creation of receipts are available.
- An infrastructure server (2) within the retail outlet having means of communication with devices of the system and aggregating information from each terminal of the system.
- A single DPS (3) for the entire retail chain, including means for processing, analysing, storing, routing, and exchange of information, as well as means for communication with the infrastructure servers of the shops, which are connected to the dry good sale automation system.

The system uses computer vision and machine learning algorithms to detect and identify products on the scale with subsequent effects on the information in the possession of the retail chain's inventory management system (6). In the system, procedures for the collection, analysis, processing, storage, and use of data for the sales automation process for dry goods in the till areas of supermarkets are completely unified and automated.

### Components of the computer vision system for the sale of dry goods

### 1) A device installed on a scale.

Computer vision module (1) - small software-hardware complex having the following basic elements: a digital video camera (1.2), an electronic processing device (1.3) supporting the processing of neural-network computer vision algorithms. The corresponding software supports two independent models of the neural network:
- the detection model (1.4);
- the identification model (1.5);

To increase the quality of image identification in the system, a smart product detector is used. This function consists of:
- determining the presence of a product in the target area;
- identifying only the product itself in the image, excluding surroundings;

This model predicts the coordinates (relative to the dimensions of the image) of the object in the image:
- relative coordinates of its centre;
- relative width and height of the object;
and the probability, in the view of the model, that the product is in the target area. After detection, the image of the product is processed by the identifier.

Network interface (1.1) for communications with the infrastructure server (2) of the system. Uses a wired (e.g. Ethernet) or wireless (e.g. WiFi) connection operating the TCP protocol. Or other means of data exchange that meet the speed and volume requirements for the data being transferred.

The module is positioned on the scale in the supermarket till area (POS terminal scale), in the sales area (self-service scale, scales in departments) where price tags can be printed to mark dry goods.

Using the video camera and the processor, the module detects/identifies the presence of the product on the scale platform. Using the weight obtained by the neural network from the DPC knowledge base (3.2), it analyses the image of the product, identifies the product, and transmits the results of the identification process to the infrastructure server. The image obtained is also transmitted to the module (2.3) of the infrastructure server for classification and use in the formation of a single dataset for subsequent iterations of the training of the neural network and the formation of the system's knowledge base.

### 3) Infrastructure server of the computer vision system.

The infrastructure server (2) is a computer-based device joining the terminal modules in the retail outlet (shop) into clusters. One is provided in each shop. It serves to aggregate the data obtained from the computer vision modules and exchange the data with the shop's computer system.

The infrastructure server obtains PLU code data on products from the shop's computer system (5), updates PLU code table, and sends the tables to the computer vision modules. At the time of the detection and identification of the product on the scale platform by the computer vision module, the server transmits the results of processing by the neural network to the shop's computer system to automate the creation of a sales receipt for the dry goods (POS scale) or to print out a price tag (salesroom scale). When a receipt is created (or a price tag in the salesroom) for dry goods, the data (product PLU code) on the selection made by the operator for the product being weighed are fed back to the infrastructure server by the shop's computer system. If the neural network fails to identify the product on the scale, the operator manually selects the PLU code of the product, and the system saves the operator's selection. By cross-referencing the operator PLU selection obtained from the shop's computer system with that obtained from the product imaging module, the infrastructure classifies the image and transmits it to the DPC (3) to form a centralised dataset.

The data aggregated by the infrastructure server (2) are transmitted periodically, e.g. once a day, or upon reaching a predetermined identification error threshold, to the DPC (3) as packets. In response, the weights obtained after regular iteration of training of the neural network are used.

### 3) Single data processing centre (DPC) for the computer vision system

There is one DPC (3) for the entire retail chain; it must be provided with the necessary resources to store large volumes of data and process neural-network algorithms.
- It provides centralised storage of data obtained from the computer vision modules via the infrastructure servers of all shops in the chain.
- It analyses and forms a single, centralised dataset, a knowledge base (3.2) for the initial (upon system startup) and subsequent (ongoing) iterations of the training of the neural network.
- The module (3.1) carries out the learning process of the neural network using the centralised dataset thus formed, and subsequently transmits the weights obtained in the training of the neural network to the infrastructure servers of the shops.

This structure and pattern of interaction of the elements of the system allows the product identification process to be unified and the collection of the dataset for regular training iterations of the neural network to be automated; thus, the learning process for products being sold for the first time is carried out automatically, and the accuracy of the identification of products increases with each iteration of training of the neural network whilst the system is in use.

The embodiments of this invention are provided by way of example only and should not be construed as limiting its scope. Various modifications and equivalent solutions are obvious to persons skilled in the art. The system may include at least a single computer vision module and DPC. Under certain configuration conditions, the functions of the computer of the module (1.3) may be allocated to the infrastructure server (2). The functions of the DPC may be allocated to the shop's infrastructure server. The computer vision modules may be directly connected to the DPC without a shop infrastructure server (e.g. in small retail outlets).

The above analysis of the prior art shows that the combination of essential features set forth in the claims is not known. This allows for a finding that this technical solution meets the novelty requirement for patentability.

A comparative analysis showed that the prior art discloses no solutions having features matching the distinguishing features of this invention, nor was the effect of these features on the technical result known. Thus, the invention meets the inventiveness requirement for patentability.

### Industrial Applicability

The foregoing discussion shows that the computer vision system for dry goods sales according to the invention is applicable; the invention may be used in retail chains, and thus meets the industrial applicability requirement for patentability.

## Claims

1. Computer vision system to aid in the sale of dry goods, consisting of:
- a computer vision module installed on shop equipment involved in the sale of dry goods, comprising a digital video camera to obtain an image of the product being weighed, a computer that processes a cascade of interconnected neural-net algorithms in order to identify the product, and a network interface for communication with the DPC and the shop's computer system;
- a single DPC for all retail outlets of a given chain that comprises a knowledge base of an expert system, in which training data for the neutral network are accumulated and stored, a learning module of the neutral network, and a network interface in order to exchange information with the computer vision module(s);
wherein, if there is more than one computer vision module in a shop, an infrastructure server is installed to connect the modules within the POS; this serves to aggregate data obtained from the computer vision modules for the shop's neural network and exchange data with the shop's computer system and the DPC; wherein, in order to increase the processing speed of the neutral-network algorithms in the computer vision modules, processing resources of the infrastructure server may be used. Some product identification processes may be passed from modules installed on the product scales in the shop to the shop's infrastructure server,
the functions of the DPC may be allocated to the shop's infrastructure server if it is not possible to communicate with the single DPC of the retail chain.
